# EUROPEAN PATENT APPLICATION

(11) **EP 4 456 184 A1**
(43) Date of publication of application: **30.10.2024**
(21) Application number: 22911712.2
(22) Date of filing: 09.12.2022
(51) Int. Cl.: H01M 4/36, H01M 4/525, H01M 4/505, H01M 4/62, H01M 10/052, C01G 53/00, H01M 4/02

(54) **POSITIVE ACTIVE MATERIAL FOR RECHARGEABLE LITHIUM BATTERY, METHOD OF PREPARING SAME, AND RECHARGEABLE LITHIUM BATTERY INCLUDING SAME**

(30) Priority: 21.12.2021 KR 20210184137
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); Posco Future M Co., Ltd, Pohang-si, Gyeongsangbuk-do 37918 (KR)
(72) Inventor: HONG, Kijoo, Suwon-si, Gyeonggi-do 16420 (KR); YU, Byong Yong, Incheon 22003 (KR); CHOI, Kwon Young, Seoul 07987 (KR); KIM, Ju Seong, Seoul 07685 (KR); NAM, Sang Cheol, Seoul 02587 (KR)
(74) Representative: Pfenning, Meinig & Partner mbB
(86) International application number: PCT/KR2022/020010
(87) International publication number: WO 2023/121079

(57) **Abstract**

A positive active material for a lithium secondary battery according to an exemplary embodiment includes a lithium composite transition metal oxide and a surface layer formed on a particle surface of the lithium composite transition metal oxide, and a content of nickel (Ni) in the lithium composite transition metal oxide. is more than 0.85 mol, the surface layer contains cobalt (Co) and aluminum (Al), and in the surface layer, the distribution of the cobalt (Co) and aluminum (Al) components have different concentration gradients.

## Description

### FIELD OF THE INVENTION

The present exemplary embodiments relate to a positive active material for a lithium secondary battery, a manufacturing method thereof, and a lithium secondary battery including the same.

### DESCRIPTION OF THE RELATED ART

Recently, there is an explosive increase in demand for electric vehicles and the demand for increased driving range, the development of secondary batteries having high-capacity and a high energy density to drive them is being actively conducted worldwide.

In order to meet these requirements, NCM positive electrode material with high Ni content may be used, and the density of the electrode plate may be improved. Specifically, research is active on secondary batteries using a bimodal positive active material in which large and small particles are mixed in a certain proportion. However, the specific surface area of the powder may be large in the form of a positive electrode material composed of secondary particles in which primary particles are agglomerated. As a result, the area in contact with the electrolyte solution is wide, so there is a high possibility of gas generation, and there is a problem of lifespan degradation due to this. In addition, because the strength of secondary particles is weak, there is a problem that small particles break into primary particles during the rolling process, which also causes the lifespan characteristic to be degraded.

To solve this problem, a method to increase the size of the primary particle has been proposed. In other words, the main degradation mechanism of positive electrode materials is the breakage of secondary particles due to contraction/expansion of primary particles. As a result, surface degradation occurs due to an increase in the reaction area of the electrolyte solution. It mainly occurs at the interface of secondary particles, and single particles with increased mechanical rigidity by eliminating this interface and consisting only of primary particles are being developed.

However, when the size of the primary particle is increased through sintering agent, flux, or over-sintering at high temperature, a rock-salt structure is formed overall on the particle surface. In this case, there is a problem that electrochemical performance such as discharge capacity, lifespan, room temperature resistance, and resistance increase rate are deteriorated.

Therefore, there is a need to develop a technology that can manufacture a positive active material with excellent electrochemical performance by protecting the surface area of single particles that are vulnerable to degradation.

### SUMMARY OF THE INVENTION

In the present exemplary embodiment, it is intended to provide a positive active material for a lithium secondary battery with excellent electrochemical characteristics, a manufacturing method thereof, and a lithium secondary battery including the same.

A positive active material for a lithium secondary battery according to an exemplary embodiment includes a lithium composite transition metal oxide; and a surface layer formed on the particle surface of the lithium composite transition metal oxide, wherein, a content of nickel (Ni) in the lithium composite transition metal oxide is more than 0.85 mole, the surface layer contains cobalt (Co) and aluminum (Al), and in the surface layer, the distribution of the cobalt (Co) and aluminum (Al) components have different concentration gradients.

In the outermost region, which extends to a depth of 10 nm from the surface of the surface layer, the weight ratio (Co+AI)/Ni may be more than 0.4.

In the outermost region, which extends to a depth of 10 nm from the surface of the surface layer, the weight ratio (Co+AI)/Ni may be 0.40 to 0.62.

The concentration of the cobalt can have a maximum value in the region between 50nm and 100nm from the surface of the surface layer.

The point where the concentration of the cobalt has the maximum value can be positioned deeper from the surface of the surface layer than the point where the concentration of the aluminum has the maximum value.

The content of the cobalt in the surface layer may be greater than the content of the aluminum.

The thickness of the surface layer may be less than 150 nm.

A manufacturing method of a positive active material for a lithium secondary battery according to another exemplary embodiment includes, preparing a lithium composite transition metal oxide containing nickel (Ni), cobalt (Co), and manganese (Mn), and having a nickel (Ni) content of 0.85 or more among the transition metal entire content; and forming a surface layer containing cobalt and aluminum on the surface of the lithium composite transition metal oxide by mixing the lithium composite transition metal oxide, cobalt (Co) compound, and aluminum (Al) compound and performing heat treatment; wherein, in the surface layer, the distribution of the cobalt (Co) and the aluminum (Al) components have different concentration gradients.

The heat treatment can be performed at temperatures ranging from 650°C to 700°C.

In the step of forming the surface layer, lithium compound can be further mixed for heat treatment.

For 1 mole of the lithium composite transition metal oxide, the content of the cobalt contained in the surface layer may be 0.01 mole or more and 0.02 mole or less.

For 1 mole of the lithium composite transition metal oxide, the content of the aluminum contained in the surface layer may be 0.0015 mole or more and 0.005 mole or less.

The step of preparing the lithium composite transition metal oxide includes mixing precursor, lithium raw material, and doping raw material including nickel, cobalt, and manganese, and then sintering at a temperature of 830°C to 950°C.

Additionally, a positive electrode for a secondary battery according to another exemplary embodiment may include the above-described positive active material for a lithium secondary battery.

Additionally, a lithium secondary battery according to another exemplary embodiment may include a positive electrode for the secondary battery described above, a negative electrode, and a non-aqueous electrolyte.

The positive active material according to an exemplary embodiment can implement a lithium secondary battery with excellent electrochemical performance by exerting a surface protection effect through the surface layer.

Additionally, when applying the positive active material of the present exemplary embodiment, the lifespan of the lithium secondary battery can be increased and thermal stability can be improved.

### BRIEF DESCRIPTION OF THE DRAWINGS

FIG. 1 is a graph showing the content of elements obtained as a result of performing component analysis from the surface to the center through EDS line scan for the positive active material manufactured according to exemplary embodiment 1.
FIG. 2 is a graph showing the content of elements obtained as a result of component analysis from the surface to the center through EDS line scan for the positive active material manufactured according to Comparative Example 1.
FIG. 3 is a graph showing the content of elements obtained as a result of component analysis from the surface to the center through EDS line scan for the positive active material manufactured according to Comparative Example 3.
FIG. 4 schematically shows the configuration of the positive active material manufactured according to exemplary embodiment 1 before and after heat treatment.
FIG. 5 schematically shows the composition of the positive active material manufactured according to Comparative Example 1 before and after heat treatment.
FIG. 6 schematically shows the composition of the positive active material manufactured according to Comparative Example 3 before and after heat treatment.
FIG. 7 is a graph showing capacity retention as the number of cycles increases for exemplary embodiments and comparative examples.

### DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

### Positive active material for lithium secondary battery

As described above, bimodal positive active material has a problem of high gas generation and small particles breaking during the rolling process.

To solve this problem, in an exemplary embodiment, the size of the primary particle can be increased to manufacture it in the form of a single particle. The lifespan characteristic can be improved by reducing the specific surface area of the positive active material and simultaneously increasing the particle strength. We can provide positive active materials with excellent resistance characteristics. However, when the size of the primary particle is increased and manufactured in the form of a single particle, there is a problem that the surface structure of the single particle is relatively vulnerable to degradation. Particularly, during the process of synthesizing single particles, a rock salt structure such as NiO is inevitably formed on the surface during high temperature heat treatment for particle growth. This causes the problem of deteriorating overall electrochemical performance, including discharge capacity, lifespan, room temperature resistance, and resistance increase rate.

In order to improve this problem, an exemplary embodiment seeks to provide a single particle positive active material including a surface layer of a composite component on the surface of a lithium composite transition metal oxide in the form of a single particle. That is, the single particle positive active material for a lithium secondary battery according to an exemplary embodiment includes a lithium composite transition metal oxide; and a surface layer formed on the particle surface of the lithium composite transition metal oxide, wherein, a content of nickel (Ni) in the lithium composite transition metal oxide is more than 0.85 mole, the surface layer contains cobalt (Co) and aluminum (Al), and in the surface layer, the distribution of the cobalt (Co) and aluminum (Al) components have different concentration gradients.

A lithium composite transition metal oxide may contain nickel, cobalt, manganese, and doping element. The content of nickel in lithium composite transition metal oxide may be 0.85 mol or more, based on 1 mol of the nickel, cobalt, and manganese. More specifically, the nickel content may range from 0.85 to 0.99 and 0.88 to 0.99. When containing such a high content of nickel, a positive active material with high power characteristics can be implemented.

On the other hand, lithium composite transition metal oxide may include two or more types selected from the group consisting of Al, Zr, Nb, Mo, W, Ti, Ce, Mg, B, P, V, Sr, and B as doping elements. The content of the doping element may range from 0.0005 mole to 0.04 mole or 0.001 mole to 0.03 mole, when the total of nickel, cobalt, manganese and doping elements is used as a 1 mole reference. In a positive active material, selection of doping elements is important to ensure lifespan and various electrochemical performances. In the present exemplary embodiment, the characteristic of the positive active material can be improved by applying various doping elements as described above.

More specifically, the doping element may include Zr and Al.

Because Zr ions occupy Li sites, Zr acts as a kind of pillar and stabilizes the layered structure by relieving the contraction of the lithium ion path during the charge and discharge process. This phenomenon reduces cation mixing and increases the lithium diffusion coefficient, which can increase the lifespan. The content of Zr ranges from 0.001 mol to 0.01 mol, more specifically, 0.0016 mol to 0.0064 mol, 0.0017 mol to 0.0055 mol or 0.002 mol to 0.005 mol, based on 1 mol of the total of the nickel, cobalt, manganese and doping elements. If the Zr doping amount satisfies the range, the high temperature resistance increase rate can be reduced and simultaneously excellent lifespan characteristics can be secured.

In addition, Al suppresses the degradation of the layered structure into a spinel structure by moving Al ions to the tetragonal lattice site. The content of Al ranges from 0.001 mol to 0.04 mol, more specifically, 0.004 mol to 0.028 mol, 0.0045 mol to 0.027 mol or 0.0055 mol to 0.025 mol, based on 1 mol of the total of the nickel, cobalt, manganese and doping elements. It can be a range. If the Al doping amount satisfies the range, high temperature lifespan and thermal stability can be further improved.

The positive active material according to the present exemplary embodiment is formed on a particle surface of lithium composite transition metal oxide and includes a surface layer containing cobalt (Co) and aluminum (Al). The surface layer contains cobalt and aluminum, and at this time, the distribution shapes of the cobalt and aluminum components within the surface layer have different concentration gradients.

That is, the surface layer is formed by heat treating lithium composite transition metal oxide with raw materials such as cobalt and aluminum added in the positive active material manufacturing process described later. Therefore, the surface layer is a layer formed on the surface of a single particle positive active material, and can be defined as a region with a high ratio of cobalt and aluminum and a low ratio of nickel compared to the composition before heat treatment of lithium composite transition metal oxide. The thickness of this surface layer may be 150 nm or less.

Meanwhile, during the heat treatment, the degree to which lithium composite transitions from the surface of the metal oxide to the center diffuses differently due to the difference in diffusion speed between cobalt and aluminum. This results in different concentration gradients within the surface layer where cobalt and aluminum are distributed. Specifically, aluminum has the highest concentration in the outermost region up to about 10 nm from the surface, generally decreases in concentration up to about 75 nm, and then tends to decrease steeply in the region from about 75 nm to about 100 nm. On the other hand, in the case of cobalt, the concentration peaks in the region between about 50 nm and about 100 nm, more specifically between 75 nm and about 100 nm, rather than the outermost region, and the concentration tends to decrease rapidly thereafter.

According to this concentration gradient, the ratio of cobalt and aluminum in the surface area can have a relatively high value. For example, in the outermost region reaching a depth of 10 nm from the surface of the surface layer, the weight ratio (Co+AI)/Ni may be more than 0.40. More specifically, the weight ratio (Co+AI)/Ni may be 0.40 or more and 0.62 or less. By having this range, excellent surface protection can be achieved along with the effect of reducing nickel concentration in the surface area. The cobalt and aluminum contained in the surface layer are formed to have different concentration gradients within the surface layer, thereby complementing each other and creating a synergistic effect, thereby maximizing the protection effect of the surface area of the positive active material. In other words, the problem of the outermost surface becoming vulnerable as the cobalt element diffuses from the surface to the center during the heat treatment process is compensated by the aluminum element existing in a high concentration in the outermost region, thereby providing excellent surface protection. Accordingly, high temperature lifespan and thermal stability can be improved.

The cobalt content in the surface layer may be greater than the aluminum content. That is, the cobalt content in the surface layer may range from about 0.01 mole to 0.02 mole per 1 mole of lithium composite transition metal oxide, and the aluminum content may range from about 0.003 mole to 0.005 mole.

### Manufacturing method of positive active material for lithium secondary battery

The manufacturing method of a positive active material according to another exemplary embodiment includes:
preparing a lithium composite transition metal oxide containing nickel (Ni), cobalt (Co), and manganese (Mn), and having a nickel (Ni) content of 0.85 or more among the transition metal entire content; and forming a surface layer containing cobalt and aluminum on the surface of the lithium composite transition metal oxide by mixing the lithium composite transition metal oxide, cobalt (Co) compound, and aluminum (Al) compound and performing heat treatment. The distribution shapes of cobalt (Co) and aluminum (Al) components in the surface layer thus obtained have different concentration gradients.

A lithium composite transition metal oxide is produced by manufacturing an aqueous solution of a metal salt containing nickel raw material, cobalt raw material, manganese raw material, and water, then supplying the aqueous solution to a co-precipitation reactor to produce metal hydroxide (precursor), and can be obtained by sintering and pulverizing it.

In the sintering step to obtain lithium composite transition metal oxide, the metal oxide is mixed with lithium raw material and selectively doped raw material and then sintering for 8 hours to 20 hours in the range of 820°C to 890°C, or 830°C to 950°C. As a result, particle growth in the form of single particles is achieved, and thus monocrystalline lithium composite transition metal oxide can be obtained.

By mixing and heat treating the lithium composite transition metal oxide obtained in this way; and a cobalt (Co) compound and/or an aluminum (Al) compound, a positive active material for a lithium secondary battery with a surface layer containing cobalt and aluminum can be obtained.

At this time, the cobalt compound was selected from the group consisting of Co(OH)₂, Co₂O₃, Co₃(PO₄)₂, CoF₃, CoOOH, Co(OCOCH₃)₂·4H₂O, Co(NO₃)·6H₂O, Co₃O₄, C_{O}(SO₄)₂·7H₂O and CoC₂O₄, and preferably Co₃O₄. In addition, the aluminum compound can be selected from the group consisting of Al₂O₃, Al(NO₃)₃, Al(OH)₃, AlPO₄, Al₂(SO₄)₃, Al₂O, AlF₃, Al₄C₃, and C₆H₁₅AlO₃, preferably Al (OH)₃.

The content of the cobalt compound and aluminum compound to be mixed can be set based on the content of the cobalt element and aluminum element in the resulting surface layer. The cobalt content in the surface layer may range from about 0.01 mole to 0.02 mole per mole of lithium composite transition metal oxide, and the aluminum content may range from about 0.003 mole to 0.005 mole.

In addition, during the heat treatment, lithium compound can be further mixed for heat treatment. Some of the lithium added in this way participates in the process of restoring the rock salt structure inevitably created during the heat treatment process into a layered structure. The remaining amount of lithium combines with other heterogeneous elements to form a strong concentration gradient coating layer on the surface in the form of a solid solution, contributing to surface protection. At this time, the amount of lithium compound added can be set as a reference to the amount of coating element added to the surface layer. For example, the amount of lithium compound can be set so that the amount of lithium element is about 0.005 mole to 0.025 mole per mole of lithium composite transition metal oxide.

Meanwhile, the heat treatment to form the surface layer can be performed at a temperature of about 650°C to about 700°C for about 4 hours to about 6 hours, preferably about 5 hours. If the heat treatment temperature is too low, cobalt and aluminum cannot sufficiently diffuse into the lithium composite transition metal oxide, making it difficult to form a surface layer. If the heat treatment temperature is too high, the movement and diffusion speed of cobalt and aluminum elements are accelerated, causing these elements to diffuse excessively in the center direction, causing a problem that the elements remaining in the surface area are significantly reduced. In other words, the effect of surface protection can be achieved only when it remains on the surface and forms a surface layer. If excessive diffusion occurs, the cobalt and aluminum elements that form the surface layer do not remain in the surface area, which reduces or eliminates the effect of the surface layer, which is not recommended.

As described above, by heat treatment, cobalt and aluminum diffuse from the surface of the lithium composite transition metal oxide to the center to form a surface layer. The thickness of the surface layer may be about 150 nm or less. At this time, because the diffusion speeds of cobalt and aluminum are different during heat treatment, the distribution shapes of cobalt and aluminum within the formed surface layer have different concentration gradients. In other words, because the diffusion speed of cobalt is faster, even if heat treatment is performed under the same conditions, the concentration of aluminum has a maximum value near the surface as described above, while the concentration of cobalt has a maximum value at a position deeper than the maximum value of aluminum concentration.

According to the manufacturing method of a positive active material for a secondary battery according to the present exemplary embodiment, a surface layer can be formed on the surface of the lithium composite transition metal oxide containing a high content of nickel. The surface layer contains cobalt and aluminum, and cobalt and aluminum have different concentration gradients. A surface protection effect can be obtained with a single particle active material, and thereby a positive active material for secondary battery with improved high temperature lifespan and thermal stability can be obtained.

### Lithium secondary battery

In another exemplary embodiment of the present invention, a lithium secondary battery including: a positive electrode including a negative active material according to an embodiment of the present invention described above, a negative electrode, and an electrolyte positioned between the negative electrode and the positive electrode is provided.

The description related to the positive active material is omitted because it is the same as the exemplary embodiment described above.

The positive active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery to be configured.

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx (0 < x < 2), Si-Y alloy (the Y is an element selected from the group consisting of an alkali metal, an alkaline earth metal, a group 13 element, a group 14 element, a transition metal, and a rare earth element and its combination thereof, but not Si), Sn, SnO₂, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative active material layer also includes a binder and may optionally further include a conductive material.

The binder serves to adhere the negative active material particles to each other and also to adhere the negative active material to the current collector.

The conductive material is used to impart conductivity to the electrode, and any electronic conductive material can be used without causing chemical change in the battery to be configured.

As the current collector, one selected from the group consisting of copper foil, nickel foil, stainless steel foil, titanium foil, nickel foam, copper foam, a conductive metal-coated polymer substrate, and a combination thereof may be used.

The positive and negative electrodes are formed by mixing a negative active material, a binder and optionally a conductive material in a solvent to prepare an active material composition, and applying the active material composition to a current collector. Since this electrode manufacturing method is widely known in the field, detailed description will be omitted in this specification. N-methylpyrrolidone, etc. can be used as the solvent, but it is not limited thereto.

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used.

Lithium secondary batteries can be classified into lithium ion batteries, lithium ion polymer batteries, and lithium polymer batteries depending on the type of separator and electrolyte used. Depending on the shape, it can be classified into cylindrical, prismatic, coin-type, pouch-type, etc., and depending on the size, it can be divided into bulk type and thin film type. The structure and manufacturing method of these batteries are widely known in this field, and is not described in further detail.

Hereinafter, an exemplary embodiment will be described in detail. However, this is presented as an example, and the present invention is not limited thereby, and the present invention is only defined by the category of the claim range, which will be described later.

### Exemplary embodiment 1

After mechanically mixing 275g of precursor with the composition of (Ni_{0.88}Co_{0.06}Mn_{0.06})(OH)₂, 125g of LiOH·H₂O, and 0.729g of ZrO₂, the mixture was sintered at 830-950°C for 10 hours in an O₂ atmosphere, and then ground to obtain lithium composite transition metal oxide.

Next, 0.431 g of LiOH·H₂O, 0.832 g of Co₃O₄, and 0.404 g of Al(OH)₃ were mixed with 100 g of the obtained lithium composite transition metal oxide and subjected to heat treatment at 650-700°C for 5 hours. A positive active material containing a surface layer containing 1.0 mol % of Li, 1.0 mol % of Co, and 0.5 mol % of Al, and having a composition of LiNi_{0.88}Co_{0.06}Mn_{0.06}Zr_{0.002}O₂ was manufactured. It was confirmed through a scanning electron microscope (SEM) that the obtained positive active material had a single particle shape with particle size D50 of 3.0 µm.

### Exemplary embodiment 2

After mechanically mixing 275g of precursor with the composition of (Ni_{0.88}Co_{0.06}Mn_{0.06})(OH)₂, 125g of LiOH·H₂O, and 0.729g of ZrO₂, the mixture was sintered at 830-950°C for 10 hours in an O₂ atmosphere and then ground to obtain lithium composite transition metal oxide.

Next, 0.431 g of LiOH·H₂O, 0.832 g of Co₃O₄, and 0.243 g of Al(OH)₃ were mixed with 100 g of the obtained lithium composite transition metal oxide and subjected to heat treatment at 650-700°C for 5 hours. A positive active material containing a surface layer containing 1.0 mol of Li, 1.0 mol% of Co, and 0.3 mol% of Al, and having a composition of LiNi_{0.88}Co_{0.06}Mn_{0.06}Zr_{0.002}O₂ was manufactured. It was confirmed through a scanning electron microscope (SEM) that the obtained positive active material had a single particle shape with particle size D50 of 32µm.

### Exemplary embodiment 3

After mechanically mixing 275g of precursor with the composition of (Ni_{0.88}Co_{0.04}Mn_{0.08})(OH)₂, 125g of LiOH·H₂O, and 0.729g of ZrO₂, the mixture was sintered at 830-950°C for 10 hours in an O₂ atmosphere and then ground to produce lithium composite transition metal oxide.

Next, 100 g of the obtained lithium composite transition metal oxide was mixed with 0.431 g of LiOH·H₂O, 0.833 g of Co₃O₄, and 0.121 g of Al(OH)₃ and subjected to heat treatment at 650-700°C for 5 hours. A positive active material containing a surface layer containing 1.0 mole of Li, 1.0 mol% of Co, and 0.15 mol% of Al, and having a composition of LiNi_{0.88}Co_{0.04}Mn_{0.08}Zr_{0.002}O₂ was manufactured. It was confirmed through a scanning electron microscope (SEM) that the obtained positive active material had a single particle shape with particle size D50 of 33µm.

### Exemplary embodiment 4

After mechanically mixing 274g of precursor with the composition of (Ni_{0.88}Co_{0.04}Mn_{0.08})(OH)₂, 126g of LiOH·H₂O, 0.391g of ZrO₂, and 1.157g of Al(OH)₃, the mixture was heated for 10 days at 830-950°C under O₂ atmosphere. After sintering, pulverization was performed to prepare lithium composite transition metal oxide.

Next, 0.431 g of LiOH·H₂O, 1.333 g of Co₃O₄, and 0.405 g of Al(OH)₃ were mixed with 100 g of the obtained lithium composite transition metal oxide and subjected to heat treatment at 650-700°C for 5 hours. A positive active material containing a surface layer containing 1.0 mol of Li, 1.6 mol% of Co, and 0.5 mol% of Al, and having a composition of LiNi_{0.88}Co_{0.04}Mn_{0.08}Zr_{0.001}Al_{0.005}O₂ was manufactured. It was confirmed through a scanning electron microscope (SEM) that the obtained positive active material had a single particle shape with particle size D50 of 3.5µm.

### Exemplary embodiment 5

After mechanically mixing 274g of precursor with the composition of (Ni_{0.88}Co_{0.04}Mn_{0.08})(OH)₂, 126g of LiOH·H₂O, 0.391g of ZrO₂, and 1.157g of Al(OH)₃, the mixture was heated for 10 minutes at 830-950°C under O₂ atmosphere. After sintering, pulverization was performed to prepare lithium composite transition metal oxide.

Next, 0.431 g of LiOH·H₂O, 1.666 g of Co₃O₄, and 0.405 g of Al(OH)₃ were mixed with 100 g of the obtained lithium composite transition metal oxide and subjected to heat treatment at 650-700°C for 5 hours. A positive active material containing a surface layer containing 1.0 mol% Li, 2.0 mol% Co, and 0.5 mol% Al, and having a composition of LiNi_{0.88}Co_{0.04}Mn_{0.08}Zr_{0.001}Al_{0.005}O₂ was manufactured. It was confirmed through a scanning electron microscope (SEM) that the obtained positive active material had a single particle shape with particle size D50 of 35µm.

### Comparative Example 1

After mechanically mixing 275g of precursor with the composition of (Ni_{0.88}Co_{0.06}Mn_{0.06})(OH)₂, 125g of LiOH·H₂O, and 0.729g of ZrO₂, the mixture was sintered at 830-950°C for 10 hours in an O₂ atmosphere and then ground to obtain lithium composite transition metal oxide.

Next, 0.832 g of Co₃O₄ was mixed with 100 g of the obtained lithium composite transition metal oxide and subjected to heat treatment at 650-700°C for 5 hours. A positive active material containing a surface layer containing 1.0 mol% Co and having a composition of LiNi_{0.88}Co_{0.06}Mn_{0.06}Zr_{0.002}O₂ was manufactured. It was confirmed through a scanning electron microscope (SEM) that the obtained positive active material had a single particle shape with particle size D50 of 3.1µm.

### Comparative Example 2

After mechanically mixing 275g of precursor with the composition of (Ni_{0.88}Co_{0.06}Mn_{0.06})(OH)₂, 125g of LiOH·H₂O, and 0.729g of ZrO₂, the mixture was sintered at 830-950°C for 10 hours in an O₂ atmosphere, and then ground to obtain lithium composite transition metal oxide.

Next, 0.243 g of Al(OH)₃ was mixed with 100 g of the obtained lithium composite transition metal oxide and subjected to heat treatment at 650-700°C for 5 hours. A positive active material containing a surface layer containing 0.3 mol% Al and having a composition of LiNi_{0.88}Co_{0.06}Mn_{0.06}Zr_{0.002}O₂ was manufactured. It was confirmed through a scanning electron microscope (SEM) that the obtained positive active material had a single particle shape with particle size D50 of 32µm.

### Comparative Example 3

After mechanically mixing 275g of precursor with the composition of (Ni_{0.88}Co_{0.06}Mn_{0.06})(OH)₂, 125g of LiOH·H₂O, and 0.729g of ZrO₂, sintered at 830-950°C for 10 hours in an O₂ atmosphere, sintered and ground. Thus, lithium composite transition metal oxide was prepared.

Next, 0.431 g of LiOH·H₂O, 0.832 g of Co₃O₄, and 0.404 g of Al(OH)₃ were mixed with 100 g of the obtained lithium composite transition metal oxide and subjected to heat treatment at 750°C for 5 hours. A positive active material containing a surface layer containing 1.0 mol % of Li, 1.0 mol % of Co, and 0.5 mol % of Al, and having a composition of LiNi_{0.88}Co_{0.06}Mn_{0.06}Zr_{0.002}O₂ was manufactured. It was confirmed through a scanning electron microscope (SEM) that the obtained positive active material had a single particle shape with particle size D50 of 32µm.

### Experimental Example 1-particle characteristic evaluation

For the positive active materials manufactured in the exemplary embodiment and comparative example, X-ray diffraction was measured using CuKα rays.

Using XRD equipment (X'pert3 powder diffraction of Panalytical), the intensity (peak area) of the (003) and (104) plane and the intensity of the (110) plane were measured at a scan speed (°/s) of 0.328. From this result, I(003)/I(104) was obtained and shown in the following Table 2.
[Table 1] [ 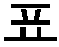 1]

| | I(003)/I(104) |
|---|---|
| exemplary embodiment 1 | 1.235 |
| exemplary embodiment 2 | 1202 |
| exemplary embodiment 3 | 1.226 |
| exemplary embodiment 4 | 1.264 |
| exemplary embodiment 5 | 1.268 |
| Comparative Example 1 | 1.174 |
| Comparative Example 2 | 1.181 |
| Comparative Example 3 | 1154 |

As a cation mixing index, when the I(003)/I(104) value decreases, the initial capacity of the positive active material may be deteriorated. However, as shown in the table, it can be seen that the I(003)/I(104) values by X-ray diffraction analysis are higher in the exemplary embodiments than in the comparative examples, from which a positive active material with excellent capacity was obtained.

### Experimental Example 2-particle cross-section elemental analysis

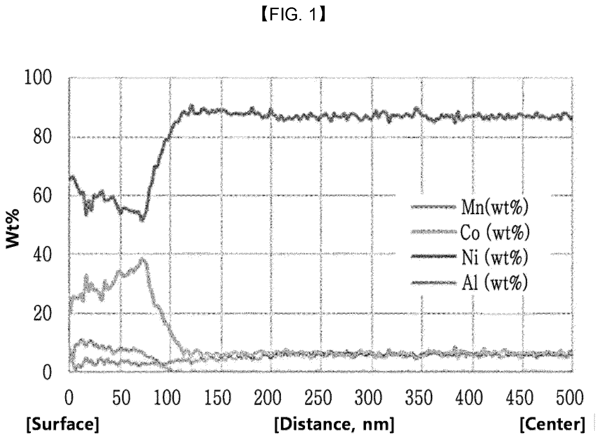

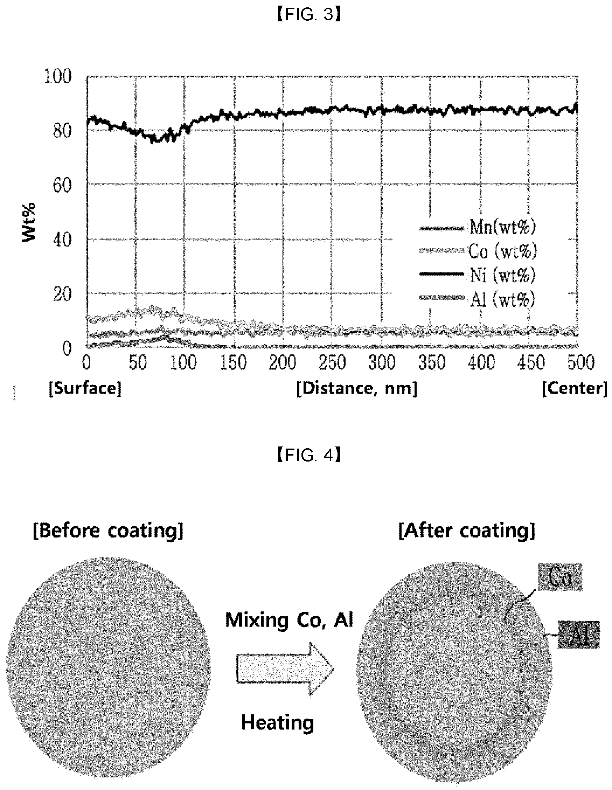

For the obtained positive active material, particle cross-section elemental analysis was performed to confirm the concentration distribution of components in the range from the surface to the center. That is, the positive active materials manufactured in Exemplary Embodiment 1 and Comparative Examples 1 and 3 were milled with FIB (Focused Ion Beam, SEIKO 3050SE) and then analyzed using EDS (Energy dispersed spectroscopy, Oxford X_max 100TLE) analysis equipment. Elements detected through EDS analysis include Ni, Co, Mn, and Al elements, which are the primary components of the base active material, and Co and Al elements, which are coating elements. The sum of the weight ratios of the corresponding elements was taken as 100%, and the relative ratios are shown in Figures 1 to 3. In addition, based on the results, FIG. 4-6 show a model of the composition of the positive active material before and after heat treatment.

As shown in FIG. 1 and FIG. 4, as a result of the coating element analysis of exemplary embodiment 1, it was confirmed that a surface layer with different concentration gradients of Co and Al was formed. In other words, the Al element has the highest concentration in the outermost region up to 10nm from the surface, and the concentration of Al continues to decrease until 75nm, and then tends to decrease steeply in the 75nm-100nm region. The Co element peaked in concentration at about 75 nm deeper than the outermost region, but after that, the concentration decreased rapidly, confirming the formation of a surface layer with a thickness of about 120 nm.

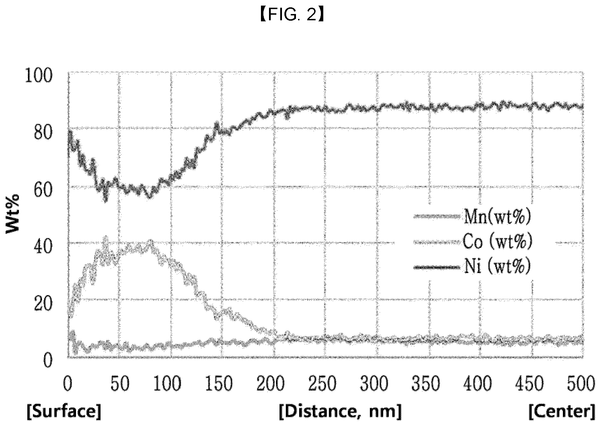

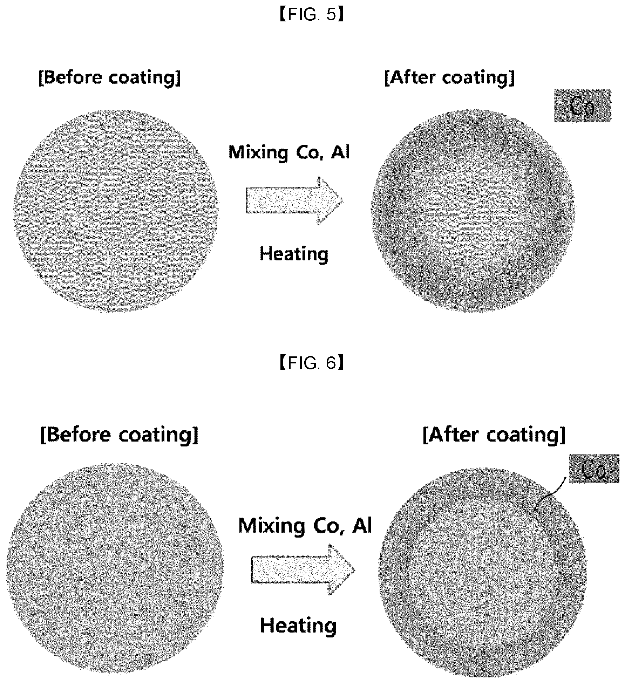

On the other hand, as shown in FIG. 2 and FIG. 5, Comparative Example 1, only the Co element was diffused, and since the diffusion speed of the Co element by heat is fast, it was confirmed that the amount of Co element remaining near the surface was small. In other words, it is similar to exemplary embodiment 1 in that it peaked at a depth of about 75 nm, but it later ranged to a depth of 200 nm, showing that the thickness of the surface layer was wide. Particularly, because the amount remaining on the surface was small, it was confirmed that the Co/Ni weight ratio remained at the level of 0.18-0.26 in the outermost region from the surface to 10 nm. In this case, as will be described later, it was confirmed that the high temperature lifespan was rapidly deteriorated because the surface protection effect by the Co element was deteriorated.

Meanwhile, in the case of Comparative Example 3, a positive active material was manufactured under the same conditions as exemplary embodiment 1, but only the heat treatment conditions for forming the surface layer by introducing Co and Al elements were different. In this case, as shown in FIG. 3 and FIG. 6. it was confirmed that the concentration of Co and Al elements present from the surface to a depth of 200 nm was significantly lowered, so that no concentration gradient appeared and that there was virtually no boundary that could be distinguished into a surface layer. This is believed to be because the heat treatment temperature was high and a significant amount of Co and Al elements that would make up the surface layer diffused toward the center. In this case, the surface layer itself is not formed, so it is judged that there is no element that can protect the surface. As described later, during the high temperature lifespan test, it was confirmed that the capacity retention and resistance increase characteristic were deteriorated, resulting in high temperature lifespan degradation.

### Experimental Example 3 - electrochemical evaluation

### (1) Coin-type half-cell manufacturing

A CR2032 coin cell was manufactured using the positive active material manufactured as above, and then electrochemical evaluation was performed.

Specifically, positive active material, conductive material (Denka Black), and polyvinylidene fluoride binder (Product name: KF1120) were mixed at a weight ratio of 96.5: 1.5: 2. This mixture was added to N-methyl-2-pyrrolidone solvent so that the solid content was about 30 wt% to prepare a positive active material slurry.

The slurry was coated on aluminum foil (thickness: 15 µm), a positive electrode current collector, using a doctor blade, dried, and rolled to manufacture a positive electrode. The loading amount of the positive electrode was about 15-16 mg/cm², and the rolling density was about 3.5g/cm³.

A 2032 coin-type half-cell was manufactured using the usual method using the positive electrode, lithium metal negative electrode (thickness 300µm, MTI), electrolyte solution, and polypropylene separator. The electrolyte solution is prepared by dissolving 1M LiPF₆ in a mixed solvent of ethylene carbonate, dimethyl carbonate and ethylmethyl carbonate (EMC) (mixing ratio EC:DMC:EMC=3:4:3 volume%) to prepare a mixed solution and then adding vinylene carbonate (VC), 3 wt%, to it.

### (2) Evaluation of charge and discharge characteristics

The coin-type half-cell manufactured in the (1) was aged for 10 hours at a room temperature of 25°C, and then a charge and discharge test was performed.

For capacity evaluation, 200 mAh/g was used as the reference capacity, and after charging to 4.25V with a constant current of 0.1C, charging was performed under constant voltage conditions until the termination current reached 0.05C. After charging and resting for 10 minutes, the capacity was measured by discharging to 2.5V with a constant current of 0.1C.

### (3) Lifespan characteristic and resistance characteristic measurement

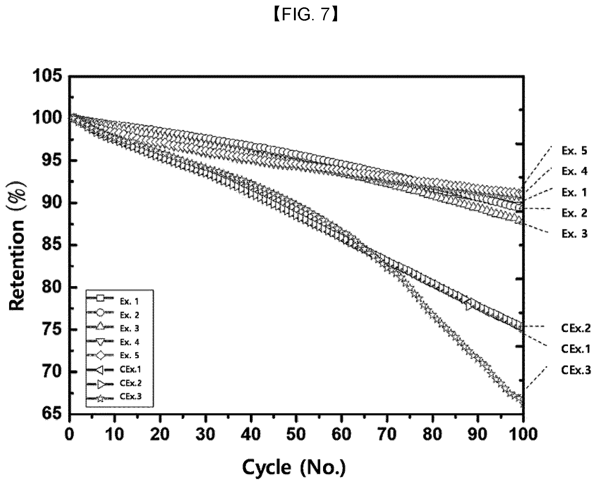

The lifespan characteristic was charged and discharged 100 times at a high temperature of 45°C under the charge and discharge conditions of 0.5C constant voltage charge and 1.0C constant current discharge. At this time, the capacity retention and resistance increase rate of the 100-th cycle compared to the first cycle were measured. The results are shown in Table 2 and FIG. 7.

**[Table 2]**

| | Initial capacity (mAh/g) | room temperature resistance (Ω) | high temperature lifespan (%) | High temperature resistance increase rate (%) |
|---|---|---|---|---|
| exemplary embodiment 1 | 203.3 | 14.2 | 89.6 | 194 |
| exemplary embodiment 2 | 202.2 | 15.6 | 89.3 | 185 |
| exemplary embodiment 3 | 203.4 | 15.4 | 87.2 | 219 |
| exemplary embodiment 4 | 201.9 | 14.8 | 90.8 | 120 |
| exemplary embodiment 5 | 201.9 | 13.1 | 91.0 | 122 |
| Comparative Example 1 | 203.0 | 14.2 | 75.1 | 581 |
| Comparative Example 2 | 202.3 | 15.1 | 75.4 | 624 |
| Comparative Example 3 | 203.9 | 14.1 | 66.2 | 650 |

Referring to Table 2 and FIG. 7, it can be confirmed that the high temperature resistance increase rate of the positive active material of exemplary embodiments 1 to 5 is significantly lower than that of Comparative Examples. In addition, it can be seen that the lifespan characteristic of the positive active material of Exemplary Examples 1 to 5 is much better than that of Comparative Examples. In other words, it was confirmed that the surface layer of exemplary embodiments 1 to 5 acts as a robust surface protection layer in the positive active material, dramatically improving the high temperature lifespan and high temperature resistance increase rate.

The present invention is not limited to the exemplary embodiments but can be manufactured in a variety of different forms. In the technical field to which the present invention belongs, a person of an ordinary skill can understand that it can be implemented in another specific form without changing the technical idea or essential characteristics of the present invention. Therefore, the exemplary embodiments described above should be understood in all respects as illustrative and not limiting.

## Claims

1. A positive active material for lithium secondary battery, comprising:
a lithium composite transition metal oxide; and a surface layer formed on the particle surface of the lithium composite transition metal oxide,
wherein, a content of nickel (Ni) in the lithium composite transition metal oxide is more than 0.85 mole,
the surface layer contains cobalt (Co) and aluminum (Al), and
in the surface layer, the distribution of the cobalt (Co) and aluminum (Al) components have different concentration gradients.

2. The positive active material of claim 1, wherein:
in an outermost region, which extends to a depth of 10 nm from the surface of the surface layer, the weight ratio of (Co+AI)/Ni is more than 0.4.

3. The positive active material of claim 2, wherein:
in an outermost region, which extends to a depth of 10 nm from the surface of the surface layer, the weight ratio of (Co+AI)/Ni is 0.40 to 0.62.

4. The positive active material of claim 1, wherein:
the concentration of the cobalt has its maximum value in the region between 50nm and 100nm from the surface of the surface layer.

5. The positive active material of claim 3, wherein:
a point where the concentration of the cobalt has the maximum value is positioned deeper from the surface of the surface layer than a point where the concentration of the aluminum has the maximum value.

6. The positive active material of claim 1, wherein:
a content of the cobalt in the surface layer is greater than the content of the aluminum.

7. The positive active material of claim 1, wherein:
a thickness of the surface layer is less than 150nm.

8. A method of preparing a positive active material for a lithium secondary battery, comprising:
preparing a lithium composite transition metal oxide containing nickel (Ni), cobalt (Co), and manganese (Mn), and having a nickel (Ni) content of 0.85 or more among the transition metal entire content; and
forming a surface layer containing cobalt and aluminum on the surface of the lithium composite transition metal oxide by mixing the lithium composite transition metal oxide, cobalt (Co) compound, and aluminum (Al) compound and performing heat treatment;
wherein, in the surface layer, the distribution of the cobalt (Co) and the aluminum (Al) components have different concentration gradients.

9. The method of claim 8, wherein:
the heat treatment takes place at a temperature of 650°C to 700°C.

10. The method of claim 8, wherein:
in the step of forming the surface layer, heat treatment is performed by further mixing a lithium compound.

11. The method of claim 8, wherein:
for 1 mole of the lithium composite transition metal oxide, a content of the cobalt contained in the surface layer is 0.01 mole or more and 0.02 mole or less.

12. The method of claim 8, wherein:
for 1 mole of the lithium composite transition metal oxide, a content of the aluminum contained in the surface layer is 0.0015 mole or more and 0.005 mole or less.

13. The method of claim 8, wherein:
the step of preparing the lithium composite transition metal oxide comprises:
mixing a precursor including nickel, cobalt, and manganese, a lithium raw material, and a doping raw material; and
sintering them at a temperature of 830°C to 950°C.

14. A positive electrode for secondary battery, comprising:
a positive active material for a lithium secondary battery of any one of claim 1 to claim 7.

15. A lithium secondary battery, comprising:
a positive electrode for secondary battery according to claim 14,
a negative electrode, and
a non-aqueous electrolyte.
